# EUROPEAN PATENT APPLICATION

(11) **EP 2 537 741 A1**
(43) Date of publication of application: **26.12.2012**
(21) Application number: 12172928.9
(22) Date of filing: 21.06.2012
(51) Int. Cl.: B62M 25/08, B62M 9/122, B62M 9/132

(54) **Derailleur for electric bicycle**

(30) Priority: 23.06.2011 TW 100121987
(71) Applicant: J.D Components Co., Ltd., Shou Shui Hsiang, Chang Hua Hsien (TW)
(72) Inventor: Cheng, Chi-Chang, 220 New Taipei City (TW); Tsai, Meng-Jie, 427 Taichung City (TW)
(74) Representative: Becker Kurig Straus

(57) **Abstract**

A derailleur (10) for an electric bicycle is composed of a control unit (20), a gearshift drive unit (30), and a gearshift cable (40) connected with the gearshift drive unit (30) and the control unit (20). The gearshift traction (F₁) required by the gearshift controller (22), the output torsion (T) of the gearshift drive unit (30), the radius (R) of the reel (36), and a bend radius of the gearshift cable (40), and the bend radius r of the gearshift cable (40) satisfy the formula r≤R≤(T/F₁). In this way, when the gearshift drive unit (30) can drive the control unit (20) for gearshift, figure out the minimum bend radius of the gearshift cable (40), so that the need for electricity can be reduced and the applicable electric motor (32) can be adopted to enable the derailleur to be lightweight.

## Description

### BACKGROUND OF THE INVENTION

### 1. Field of the Invention

The present invention relates generally to an electric bicycle, and more particularly, to a derailleur for an electric bicycle.

### 2. Description of the Related Art

As the global population of cycling and recreation has become more and more and the consciousness of environmental protection has risen, a bicycle should not only be provided with the functions of sporting recreation and short-distance transportation and with the structural design of comfort and popularity but also with the lightweight feature for conformity with modern people's needs.

As far as the electric bicycle is concerned, it not only includes the structure of the common bicycle but a drive motor and a battery pack functioning as the auxiliary power source. To enable the cyclist to have more options for cycling speed, the bicycle is usually installed with a derailleur but it will bring the whole bicycle more weight to inevitably fail to satisfy the need for light weight. However, among those devices, the derailleur is the core technology in the current industry. Thus, how to improve, research, and develop a lightweight derailleur is what the present invention does.

### SUMMARY OF THE INVENTION

The primary objective of the present invention is to provide a derailleur, which can be lightweight.

The secondary objective of the present invention is to provide a derailleur, which can secure the service life of the gearshift cable.

The tertiary objective of the present invention is to provide a derailleur, which can prevent the winding stroke of the shift cable from deviation.

The foregoing objectives of the present invention are attained by the derailleur composed of a control unit, a gearshift drive unit, and a gearshift cable. The control unit includes a gearshift controller. The gearshift traction required by the gearshift controller is denoted by F₁. The gearshift drive unit includes an electric motor and a reel connected with the electric motor. The output torsion of the gearshift drive unit is denoted by T. The radius of the reel is denoted by R. The gearshift cable is connected between the reel and the gearshift controller and drivable by the gearshift drive unit to drive the control unit for gearshift. Besides, the bend radius of the gearshift cable is denoted by r, which satisfies the formula: r≦R≦(T/F₁). According to such formula, under the circumstance that the gearshift drive unit can drive the control unit for gearshift, figure out the minimum bend radius of the gearshift cable and then adopt the applicable electric motor according to the bend radius of the gearshift cable to enable the derailleur of the present invention to be lightweight.

Further, the gearshift traction F₁ required by the gearshift controller must be less than a fatigue limit of the gearshift cable to secure the service life of the gearshift cable. Besides, the radius R of the reel satisfies the formula: R≧(D+L)/(2π) where D denotes the distance of straight stroke of the gearshift cable as required in the maximum gearshift stroke; L denotes the length provided by the reel for fastening the gearshift cable; π denotes pi, which is a ratio of the circumference of a circle to its diameter. In this way, the maximum radius of the reel can be figured out to avoid unnecessary deviation resulting from the stroke of more than one round for which the gearshift cable is wound around the reel.

### BRIEF DESCRIPTION OF THE DRAWINGS

FIG. 1 is a perspective view of a preferred embodiment of the present invention.
FIG. 2 is a partially exploded view of the preferred embodiment of the present invention.
FIG. 3 is a plan view of a part of the preferred embodiment of the present invention.

### DETAILED DESCRIPTION OF PREFERRED EMBODIMENTS

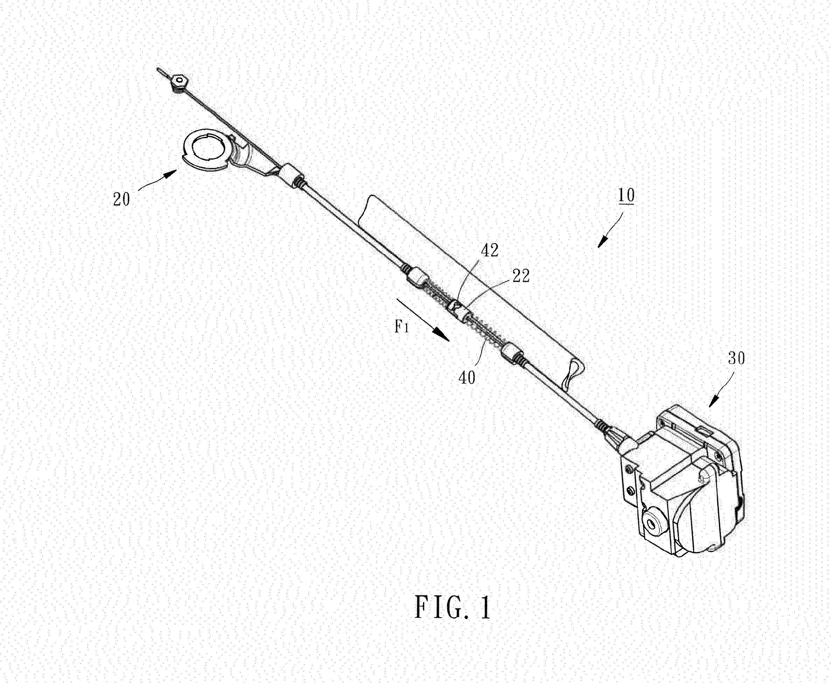

Referring to FIG. 1, a derailleur 10 for an electric bicycle in accordance with a first preferred embodiment of the present invention is composed of a control unit 20, a gearshift drive unit 30, and a gearshift cable 40. The detailed descriptions and operations of these elements as well as their interrelations are recited in the respective paragraphs as follows.

The control unit 20 includes a gearshift controller 22.

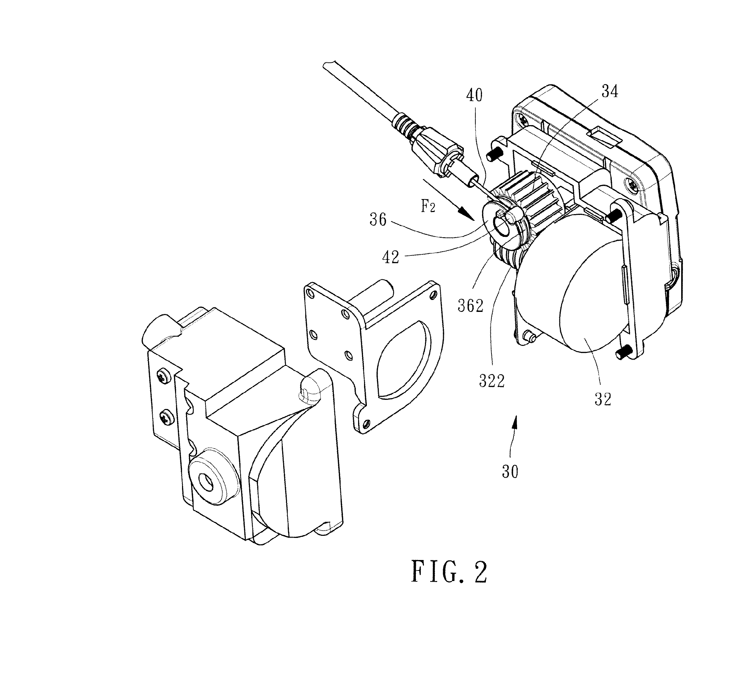

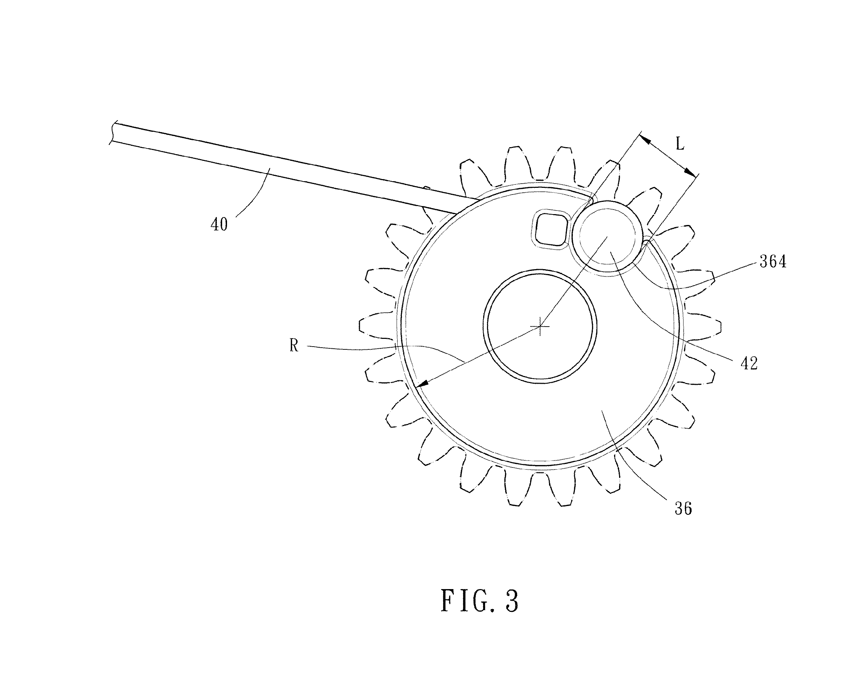

Referring to FIGS. 2-3, the gearshift drive unit 30 includes an electric motor 32, a reduction worm gear 34, and a reel 36. The electric motor 32 includes a worm 322. The reduction worm gear 34 is engaged with the worm 322 of the electric motor 32 and can be driven by the worm 322 for rotation. The reel 36 is mounted to one side of the reduction worm gear 34 and rotatable in synchrony with the reduction worm gear 34. Besides, the reel is provided with an annular groove 362 and a recession 364. The annular groove 362 is formed on an external periphery of the reel 36. The recession 364 is perpendicular to the annular groove 362.

The gearshift cable 40 includes two head portions 42, each of which is formed at one of two ends thereof. One of the head portions 42 is fixed inside the recession 364 and the other is fixed to the gearshift controller 22 to enable the gearshift cable 40 to be connected between the reel 36 and the gearshift controller 22 in such a way that the gearshift cable 40 can be forced by a traction derived from the reel 36 to be wound around the annular groove 362 and synchronically drive the control unit 20 for gearshift in the process of being forced by the traction.

A gearshift traction required by the gearshift controller 22 is denoted by F₁ which is 5 Kg in this embodiment. Next, figure out the output torsion T of the gearshift drive unit 30 by the formula (1): T=T₁×Rₜ.×η where T₁ denotes the default output torsion, Rₜ denotes the reduction ratio of the reduction worm gear 34, and η denotes the transmission efficiency of the gearshift drive unit 30. In this embodiment, T₁ is 0.82 Kg-cm, Rₜ is 1:16, and η is 65%. Substitute those values into the formula (1) to get T =0.82×16×0.65=8.528 Kg-cm and next, T is divided by F₁ to figure out the maximum design diameter (T/F₁ = 8.528/5 = 1.705 cm) of the reel 36.

However, to avoid any deviation resulting from the stroke of more than one round for which the gearshift cable is wound around the reel, the bend diameter r of the gearshift cable 40 and the diameter R of the reel 36 should satisfy the formula (2): r≦R≦(T/F₁) and the diameter R of the reel 36 should satisfy the formula (3): R≧ (D+L)/(2π) where D denotes the distance of straight stroke required in the maximum gearshift stroke, L denotes the length provided by the reel 36 for fastening the gearshift cable, namely the length of the recession 364, and π is pi. In this embodiment, D is 3 cm and L is 0.48 cm. Substitute the values into the formula (3) to get (D+L)/(2π)=(3+0.48)/(2π)= 0.554 cm. As known from that, the diameter R of the reel 36 must not be smaller than 0554 cm, and finally from the formula (2), the minimum bend diameter r≦0.554cm≦ 1.705cm is figured out.

In addition, the gearshift cables 40 made of different material have different fatigue limits separately. To secure the service life of the gearshift cable, the fatigue limit of the gearshift cable must be bigger than the gearshift traction required by the gearshift controller 22, namely, satisfying the formula 4): Fₗᵢₘᵢₜ > F₁ where Fₗᵢₘᵢₜ is the fatigue limit of the gearshift cable 40 and F₁ is the gearshift traction required by the gearshift controller 22. In light of the formula (4), it is known that the fatigue limit of the gearshift cable 40 must be bigger than 5 Kg.

To meet different needs in design, two more preferred embodiments are taken for calculation of two sets of different data to figure out the minimum bend radius of the gearshift cable 40, the maximum radius of the reel 36, and the fatigue limit of the gearshift cable 40.

In a second preferred embodiment, the gearshift traction F₁ required by the gearshift controller 22 is 6 Kg, the default output torsion T₁ is 0.5Kg-cm, the reduction ratio Rₜ of the reduction worm gear 34 is 1:35, and the transmission efficiency η of the gearshift drive unit 30 is 70%. Substitute those values into the formula (1) to get the output torsion T of the electric motor 32 of the second embodiment, i.e. T = 0.5×35×0.7= 12.25 Kg-cm. Next, T is divided by F₁ to get the maximum design radius of the reel 36, i.e. T/ F₁ = 12.25/6= 2.042 cm. Next, figure out the radius R of the reel 36 according to the formula (3); in the second embodiment, D is 5 cm and L is 0.6 cm, substituting the values into the formula (3) to get R≧(5+0.6)/(2π) = 0.891 cm; namely, the radius R of the reel 36 of the second embodiment must not be smaller than 0.891 cm. And then, get the minimum bend radius r of the gearshift cable 40 by means of the formula (2), i.e. r≦ 0.891 cm≦2.042 cm. Finally, by means of the formula (4), the fatigue limit of the gearshift cable 40 must be bigger than 6 Kg. Thus, the minimum radius of the gearshift cable 40 applicable to the second embodiment must not be bigger than 0.892 cm and the fatigue limit of the gearshift cable 40 must be bigger than 6 Kg.

In a third preferred embodiment, the gearshift traction F₁ required by the gearshift controller 22 is 5.5 Kg, the default output torsion T₁ of the electric motor 32 is 0.75Kg-cm, the reduction ratio Rₜ of the reduction worm gear 34 is 1:22, and the transmission efficiency η of the gearshift drive unit 30 is 75%. Substitute the values into the formula (1) to get the output torsion T of the electric motor 32 of the second embodiment, i.e. T=0.75×22×0.75= 12.375 Kg-cm. Next, T is divided by F₁ to get the maximum design radius of the reel 36, i.e. T/ F₁= 12.375/5.5 = 2.25 cm. Next, figure out the radius R of the reel 36 according to the formula (3); in the third embodiment, D is 5 cm and L is 0.6 cm, substituting the values into the formula (3) to get R≧ (3.5+0.55)/(2π)=0.645 cm; namely, the radius R of the reel 36 of the third embodiment must not be smaller than 0.645 cm. And then, get the minimum bend radius r of the gearshift cable 40 by means of the formula (2), i.e. r≦ 0.645 cm≦2.042 cm. Finally, by means of the formula (4), the fatigue limit of the gearshift cable 40 must be bigger than 5.5 Kg. Thus, the minimum radius of the gearshift cable 40 applicable to the second embodiment must not be bigger than 0.645 cm and the fatigue limit of the gearshift cable 40 must be bigger than 5.5 Kg.

In conclusion, the derailleur of the present invention can calculate the most applicable gearshift cable subject to different needs to decrease the need for electricity and to adopt applicable power source, thus preventing the winding stroke of the gearshift cable from deviation and securing the service life of the gearshift cable.

Although the present invention has been described with respect to specific preferred embodiments thereof, it is in no way limited to the specifics of the illustrated structures but changes and modifications may be made within the scope of the appended claims.

## Claims

1. A derailleur (10) for an electric bicycle, **characterized in that** the derailleur (10) comprises:
a control unit (20) having a gearshift controller (22), a gearshift traction required by the gearshift controller (22) being denoted by F₁;
a gearshift drive unit (30) having an electric motor (32) and a reel (36) connected with the electric motor (32), the gearshift drive unit (30) having an output torsion denoted by T, the reel (36) having a radius denoted by R; and
a gearshift cable (40) connected between the reel (36) and the gearshift controller (22) and being drivable by the gearshift drive unit (30) to drive the control unit (20) for gearshift, the gearshift cable (40) having a bend radius denoted by r satisfying the formula: r≦R≦(T/F₁)_{.}

2. The derailleur (10) as defined in claim 1, **characterized in that** the gearshift cable (40) comprises a fatigue limit denoted by Fₗᵢₘᵢₜ where Fₗᵢₘᵢₜ > F₁.

3. The derailleur (10) as defined in claim 1, **characterized in that** the radius of the reel (36) satisfies the formula: R≧(D+L)/(2π) where D denotes the distance of straight stroke required in the maximum gearshift stroke, L denotes the length provided by the reel (36) for fastening the gearshift cable (40), and π is pi.

4. The derailleur (10) as defined in claim 3, **characterized in that** the reel (36) comprises an annular groove (362) and a recession (364), the annular groove (362) being formed on an external periphery of the reel (36) for the gearshift cable (40) to be wound around, the recession (364) being perpendicular to the annular groove (362) for fixing an end of the gearshift cable (40), the recession (364) being denoted by L.

5. The derailleur (10) as defined in claim 1, **characterized in that** the gearshift drive unit (30) comprises a reduction worm gear (34); the electric motor (32) comprises a worm (322), the reduction worm gear (34) being engaged with the worm (322) for the reel (36) to be mounted thereon; the output torsion T of the gearshift drive unit (30) satisfies the formula: T=T₁×Rₜ×η where T₁ denotes a default output torsion of the electric motor (32), Rₜ denotes a reduction ratio of the reduction worm gear (34), and η denotes a transmission efficiency of the gearshift drive unit (30).

6. A derailleur (10) for an electric bicycle, **characterized in that** the derailleur (10) comprises:
a control unit (20) having a gearshift controller (22), a gearshift traction required by the gearshift controller (22) being denoted by F₁;
a gearshift drive unit (30) having an electric motor (32) and a reel (36) connected with the electric motor (32); and
a gearshift cable (40) connected between the reel (36) and the gearshift controller (22) and being drivable by the gearshift drive unit (30) to drive the control unit (20) for gearshift, the gearshift cable (40) having a fatigue limit denoted by Fₗᵢₘᵢₜ satisfying the formula: Fₗᵢₘᵢₜ > F₁.

7. The derailleur (10) as defined in claim 6, **characterized in that** the gearshift drive unit (30) comprises an output torsion denoted by T; the reel (36) comprises a radius denoted by R; the gearshift cable (40) comprises a bend radius denoted by r satisfying the formula: r≦R≦(T/F₁).

8. The derailleur (10) as defined in claim 7, **characterized in that** the radius R of the reel (36) satisfies the formula: R≧(D+L)/(2π) where D denotes a distance of straight stroke required in a maximum gearshift stroke, L denotes a length provided by the reel (36) for fastening the gearshift cable (40), and π is pi (a ratio of the circumference of a circle to its diameter).

9. The derailleur (10) as defined in claim 8, **characterized in that** the reel (36) comprises an annular groove (362) and a recession (364), the annular groove (362) being formed on an external periphery of the reel (36) for the gearshift cable (40) to be wound around, the recession (364) being perpendicular to the annular groove (362) for fixing an end of the gearshift cable (40), the recession (364) being denoted by L.

10. The derailleur (10) as defined in claim 6, **characterized in that** the gearshift drive unit (30) comprises a reduction worm gear (34); the electric motor (32) comprises a worm (322), the reduction worm gear (34) being engaged with the worm (322) for the reel (36) to be mounted thereon; the output torsion T of the gearshift drive unit (30) satisfies the formula: T=T₁×Rₜ×η where T₁ denotes a default output torsion of the electric motor (32), Rₜ denotes a reduction ratio of the reduction worm gear (34), and η denotes a transmission efficiency of the gearshift drive unit (30).

11. A derailleur (10) for an electric bicycle, **characterized in that** the derailleur (10) comprises:
a control unit (20) having a gearshift controller (22);
a gearshift drive unit (30) having an electric motor (32) and a reel (36) connected with the electric motor (32), the reel (36) having a radius denoted by R; and
a gearshift cable (40) connected between the reel (36) and the gearshift controller (22) and being drivable by the gearshift drive unit to drive the control unit (20) for gearshift;
wherein the radius R of the reel (36) satisfies the formula: R≧(D+L)/(2π) where D denotes a distance of straight stroke required in a maximum gearshift stroke, L denotes a length provided by the reel (36) for fastening the gearshift cable, and π is pi.

12. The derailleur (10) as defined in claim 11, **characterized in that** a gearshift traction required by the gearshift controller (22) being denoted by F_{1;} the gearshift drive unit (30) comprises an output torsion denoted by T; and the gearshift cable (40) comprises a bend radius denoted by r satisfying the formula: r≦R≦(T/F₁).

13. The derailleur (10) as defined in claim 12, **characterized in that** the gearshift cable (40) comprises a fatigue limit denoted by Fₗᵢₘᵢₜ satisfying the formula: Fₗᵢₘᵢₜ > F₁.

14. The derailleur (10) as defined in claim 11, **characterized in that** the reel (36) comprises an annular groove (362) and a recession (364), the annular groove (362) being formed on an external periphery of the reel (36) for the gearshift cable (40) to be wound around, the recession (364) being perpendicular to the annular groove (362) for fixing an end of the gearshift cable (40), the recession (364) being denoted by L.

15. The derailleur (10) as defined in claim 11, **characterized in that** the gearshift drive unit (30) comprises a reduction worm gear (34); the electric motor (32) comprises a worm (322), the reduction worm gear (34) being engaged with the worm (322) for the reel (36) to be mounted thereon; the output torsion T of the gearshift drive unit (30) satisfies the formula: T=T₁×Rₜ×η where T₁ denotes a default output torsion of the electric motor (32), Rₜ denotes a reduction ratio of the reduction worm gear (34), and η denotes a transmission efficiency of the gearshift drive unit (30).
